# EUROPEAN PATENT APPLICATION

(11) **EP 4 439 173 A1**
(43) Date of publication of application: **02.10.2024**
(21) Application number: 23165108.4
(22) Date of filing: 29.03.2023
(51) Int. Cl.: G03B 21/62, G02B 27/01, G03B 21/10

(54) **PROJECTION SYSTEM, VEHICLE, METHOD FOR PROJECTING INFORMATION ON A WINDOW**

(71) Applicant: Volvo Construction Equipment AB, 63185 Eskilstuna (SE)
(72) Inventor: Nowak, Piotr, 63185 ESKILSTUNA (SE); Kasel, Andreas, 63185 ESKILSTUNA (SE)
(74) Representative: Eisenführ Speiser

(57) **Abstract**

A projection system for a vehicle, especially a working vehicle, comprising:
- a switchable foil or film on or in at least parts of a window of the vehicle, wherein a degree of transparency of the switchable foil or film is controllable by an applied voltage,
- at least one projector, which is able and arranged to display information on the switchable foil or film and
- a controller, which is able and adapted to control the degree of transparency and to control the at least one projector.

## Description

### TECHNICAL FIELD

The disclosure relates generally to projection system for a vehicle. In particular aspects, the disclosure relates to projection system, a vehicle and a method for projecting information on a window. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Providing information to a driver or operator, especially safety information, is very important. Today such information is preferably presented in head-up displays or other additional screen devices.

### SUMMARY

According to a first aspect of the disclosure, a projection system for a vehicle, especially a heavy-duty vehicle is provided. The projection system comprises a switchable foil or film on or in at least parts of a window of the vehicle, wherein a degree of transparency of the switchable foil or film is controllable by an applied voltage, at least one projector, which is able and arranged to display information on the switchable foil or film, a controller, which is able and adapted to control the degree of transparency and to control the at least projector. The first aspect of the disclosure may seek to provide a display system for a vehicle which is integrated in a window, preferably in the front window, and provides a wider space for displaying information in a main viewing direction of the driver. Such a bigger screen gives a better overview for the operator, especially more detail in direct line-of-sight. A technical benefit may include to additionally provide information for people passing by or surrounding the vehicle. Presenting important information like:

In some examples, the information comprises a warning sign, a warning message or information on a vehicle status, such as charging status and progress in percentage; service maintenance - do not use machine; machine ready to use or screen mirroring. Furthermore, an instruction manual, a maintenance service, a check service error or in brakes also news may be projected on the switchable foil or film. Furthermore, the information may comprise a picture of a rear or side view camera.

In some examples, including in at least one preferred example, optionally the switchable foil or film comprises liquid crystals (LC) or a suspended particle device (SPD). These types of switchable is flexibly adaptable and the transparency may be easily controlled.

In some examples, the switchable foil or film is switchable only between a transparent and an opaque state. Alternatively, several degrees of transparency between a transparent and an opaque state are adjustable. This allows to further control the degree of transparency either to optimize displaying information for the operator and for people outside the vehicle or to optimize the degree of transparency depending on the information to be projected and an intensity of light in vehicle.

In this regard, it is furthermore preferred if a light sensor adapted to determine an intensity of light falling onto said light sensor and adapted to provide information on the intensity of light to the controller is integrated in the system.

In some examples, the switchable foil or film comprises at least two different sections, which are independently controllable. This may allow providing different information in the different sections. Furthermore, this can be used to provide information for the operator in one section and information for people surrounding the vehicle in another section.

It is further preferred if a brightness of the at least one projector is adjustable. Then it is further preferred if the controller is able and adapted to adjust the brightness of the at least one projector. This allows optimizing the presentation of information on the switchable foil or film. It is further preferred if the controller is able to adjust the brightness of the at least one projector depending of the intensity of light falling onto the light sensor.

In some examples, the projection system comprises two projectors, wherein preferably each of the two projectors is able and arranged to project different information on different parts of the switchable foil or film. A technical benefit may include to provide different types of information independently with the help of two projectors or to provide different information on different windows. It is then further preferred if the different parts of the switchable foil or film are different sections, which are independently controllable.

In some examples, the different sections may be placed on or in different windows of the vehicle. A technical benefit may include providing information in the line-of-sight where it is most needed. For example, the view of a rear or side view camera may be displayed on a side window to enhance safety when turning.

In some examples at at least one of the degrees of transparency the information on the switchable foil or film is visible from outside the vehicle. Thus, information especially on a status of the vehicle such as charging status, maintenance status can be provided for example to an operator searching of a vehicle to use in a vehicle fleet. Furthermore, warning signs can be provided to passing pedestrians.

The picture of the rear or side view camera is preferably projected on an opaque section of the switchable foil or film as this information is only needed for the operator and the picture may be clearer provided on an opaque section than an a partly transparent section.

In some examples, the controller comprises two controller units, one for controlling the switchable film or foil and the other for controlling the projector.

In further examples, the controller is able and designed to receive information on a vehicle status and to determine related warning signs, warning messages and/or information based on the information on the vehicle status and to control the projector to project these.

It is preferred if the controller is able and designed to control the degree of transparency based on the projected information.

Preferably the window is a front window, a rear window or a side window.

According to a second aspect of the disclosure a vehicle, especially a heavy-duty vehicle, is provided, which comprises a projection system according to the first aspect of the invention.

According to a third aspect of the disclosure a method for projecting information on a window of a vehicle, especially of a working vehicle , comprising the steps:
- adjusting a degree of transparency of a switchable foil or film on or in at least parts of the window of the vehicle, wherein of the switchable foil or film is controllable by an applied voltage,
- displaying information on the switchable foil or film using a projector.

As to the advantages, preferred embodiments and details of the vehicle and the method for projecting information on a window of a vehicle reference is made to the corresponding aspects and embodiments described herein above with respect to the locking control method.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 is an exemplary view of a vehicle according to an example of the second aspect of the invention.
**FIG. 2** **A** and **FIG. 2B** are detailed views a vehicle according to a further example of the second aspect of the invention.

### DETAILED DESCRIPTION

The detailed description set forth below provides information and examples of the disclosed technology with sufficient detail to enable those skilled in the art to practice the disclosure.

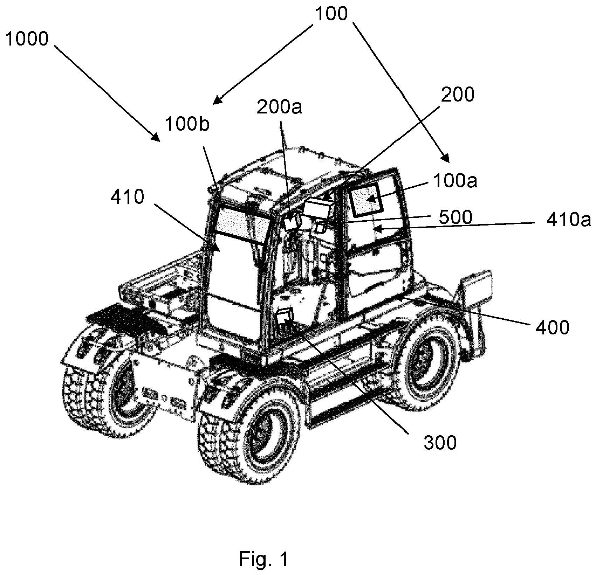

**FIG. 1** is an exemplary view of a vehicle 400, herein a tractor, according to an example of the second aspect of the invention. The vehicle 400 comprises a projection system 1000 for a vehicle 400, especially a working vehicle 400. The projection system 1000 comprises a switchable film 100 in parts of a window 410 of the vehicle 400. The switchable film 100 is herein arranged between two glass panels. A degree of transparency of the switchable film 100 is controllable by an applied voltage. Thus the switchable film 100 can be made opaque or partly transparent by applying a correspondent voltage. The switchable film 100 comprises herein two different sections 100a, 100b, which are independently controllable and which are placed in different windows 410, 410a of the vehicle 400.

The projection system 1000 further comprises two projectors 200, 200a which is able and arranged to display information, herein not shown on the switchable film 100 and a controller 300, which is able and adapted to control the degree of transparency and to control the projectors 200, 200a. In the shown example a suspended particle device SPD is used. In the shown example for the switchable film several degrees of transparency between a transparent and an opaque state are adjustable.

The projectors 200, 200a are in this example arranged in the rear of a cabin of the vehicle. A brightness of the projectors 200, 200a is adjustable. The projection system further comprises a light sensor 500. The light sensor 500 is able to detect an intensity of light falling onto said light sensor. The controller 300 is able and adapted to adjust the brightness of the projectors 200, 200a, preferably dependent on intensity of light falling onto said light sensor.

Each of the two projectors 200, 200a is able and arranged to project different information on different parts of the switchable film 100, which are different sections 100b, 100a arranged in different windows 410, 410a of the vehicle 400. For example information on the machine status like charging or maintenance status are displayed on the section 100b at the front window 410 and a view of a side camera (not shown herein) is displayed on the section 100a at the side window 410a, wherein the section 100a is switched into an opaque status.

The controller 300 may comprise two controller units, one for controlling the switchable film 100 and the other for controlling the projectors 200, 200a.

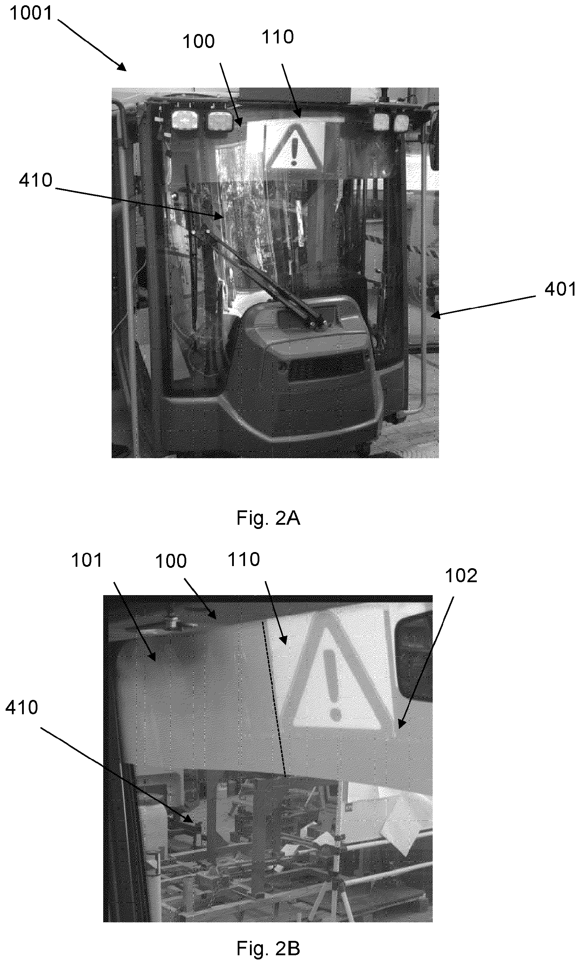

**FIG. 2** **A** and **FIG. 2B** are detailed views a working vehicle 401 according to a further example of the second aspect of the invention. Vehicle 401 comprises a projection system 1000, which is merely the same as in FIG. 1, thus only the differences will be described in detail. The projection system 1001 comprises a switchable foil 100 on parts of a window 410 of the vehicle 401, wherein a degree of transparency of the switchable foil 100 is controllable by an applied voltage. The switchable foil 100 is preferably a LCD foil.

The projection system 1001 comprises one projector (not shown) which is able and arranged to display information 110, herein as an example a warning sign on the switchable foil 100.

A controller (not shown) is also part of the projection system, the controller is able and adapted to control the degree of transparency and to control the projector. In particular the controller is able and designed to receive information on a vehicle 401 status and to determine related warning signs, warning messages and/or information based on the information on the vehicle status and to control the projector 200 to project these.

As can be seen in Fig. 2A the switchable foil can be switched to a degree of transparency, at which the information 110, herein the warning sign on the switchable foil 100 is visible from outside the vehicle 401. Thus pedestrians or other people passing the vehicle can be informed on a status of the vehicle or be warned. Herein the controller 300 is able and designed to receive information on a vehicle 400,401 status and to determine related warning signs, warning messages and/or information based on the information on the vehicle status and to control the projector 200 to project these.

Thus the invention allows for a visualization of important data in front of the operator or people around the machine e.g. during brake or stop of the vehicle. Additionally, the switchable foil can be used as a screen for camera views to show more detail (e.g. a 360° view plus rear camera). The presented information may be for example charging status and progress in percentage, service maintenance - do not use machine, machine ready to use or a screen mirroring.

In Fig.2B it can be seen that the switchable foil or film 100 comprises two different sections 101 and 102, which are independently controllable. Thus for example section 101 can be made opaque while section 102 is transparent or partly transparent.

Preferably the controller 300 is able and designed to control the degree of transparency based on the projected information.

Example 1: A projection system for a vehicle, especially a working vehicle, comprising:
- a switchable foil or film on or in at least parts of a window of the vehicle, wherein a degree of transparency of the switchable foil or film is controllable by an applied voltage,
- at least one projector, which is able and arranged to display information on the switchable foil or film and
- a controller, which is able and adapted to control the degree of transparency and to control the at least one projector.

Example 2: The projection system of claim 1, wherein the switchable foil or film comprises liquid crystals (LC) or a suspended particle device (SPD).

Example 3: The projection system of any of claims 1 to 2, wherein the switchable foil or film is switchable only between a transparent and an opaque state.

Example 4: The projection system of any of claims 1 to 2, wherein several degrees of transparency between a transparent and an opaque state are adjustable.

Example 5: The projection system of any of the preceding claims, wherein the switchable foil or film comprises at least two different sections, which are independently controllable.

Example 6: The projection system of any of the preceding claims, wherein a brightness of the at least one projector is adjustable.

Example 7: The projection system of claim 6, wherein the controller is able and adapted to adjust the brightness of the at least one projector.

Example 8: The projection system of any of the preceding claims comprising two projectors.

Example 9: The projection system of claim 8, wherein each of the two projectors is able and arranged to project different information on different parts of the switchable foil or film.

Example 10: The projection system of claim 9, wherein the different parts of the switchable foil or film are different sections, which are independently controllable.

Example 11: The projection system according to claim 10, wherein the different sections are placed on or in different windows of the vehicle.

Example 12: The projection system of any of the preceding claims, wherein at least one of the degrees of transparency the information on the switchable foil or film is visible from outside the vehicle.

Example 13: The projection system of any of the preceding claims, wherein the information comprises a warning sign, a warning message or information on a vehicle status.

Example 14: The projection system of any of the preceding claims, wherein the information comprises a picture of a rear or side view camera.

Example 15: The projection system of claim 14, wherein the picture of the rear or side view camera is projected on an opaque section of the switchable foil or film.

Example 16: The projection system of any of the preceding claims, wherein the controller comprises two controller units, one for controlling the switchable film or foil and the other for controlling the projector.

Example 17: The projection system of any of the preceding claims, wherein the controller is able and designed to receive information on a vehicle status and to determine related warning signs, warning messages and/or information based on the information on the vehicle status and to control the projector to project these.

Example 18: The projection system of any of the preceding claims, wherein the controller is able and designed to control the degree of transparency based on the projected information.

Example 19: The projection system of any of the preceding claims, wherein the window is a front window, a rear window or a side window .

Example 20: A vehicle , especially a working vehicle, comprising a projection system of any of the preceding claims.

Example 21: A method for projecting information of a window of a vehicle, especially on a working vehicle, comprising the steps:
- adjusting a degree of transparency of a switchable foil or film on or in at least parts of the window of the vehicle, wherein of the switchable foil or film is controllable by an applied voltage,
- displaying information on the switchable foil or film using a projector.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A projection system (1000) for a vehicle (400,401), especially a working vehicle (400,401), comprising:
- a switchable foil or film (100) on or in at least parts of a window (410) of the vehicle (400,401), wherein a degree of transparency of the switchable foil or film (100) is controllable by an applied voltage,
- at least one projector (200) which is able and arranged to display information (110) on the switchable foil or film (100) and
- a controller (300), which is able and adapted to control the degree of transparency and to control the at least one projector (200) .

2. The projection system (1000) of claim 1, wherein the switchable foil or film comprises liquid crystals (LC) or a suspended particle device (SPD)

3. The projection system (1000) of any of claims 1 to 2, wherein the switchable foil or film (100) is switchable only between a transparent and an opaque state.

4. The projection system (1000) of any of claims 1 to 2, wherein several degrees of transparency between a transparent and an opaque state are adjustable.

5. The projection system (1000) of any of the preceding claims, wherein the switchable foil or film (100) comprises at least two different sections (101, 102), which are independently controllable.

6. The projection system (1000) of any of the preceding claims, wherein a brightness of the at least one projector (200) is adjustable, wherein preferably the controller (300) is able and adapted to adjust the brightness of the at least one projector (200).

7. The projection system (1000) of any of the preceding claims comprising two projectors (200).

8. The projection system (1000) of claim 7, wherein each of the two projectors (200) is able and arranged to project different information (110) on different parts of the switchable foil or film (100), wherein preferably the different parts of the switchable foil or film (100) are different sections, which are independently controllable.

9. The projection system (1000) according to claim 8, wherein the different sections are placed on or in different windows (410) of the vehicle (400,401).

10. The projection system (1000) of any of the preceding claims, wherein at at least one of the degrees of transparency the information on the switchable foil or film (100) is visible from outside the vehicle (400,401).

11. The projection system (1000) of any of the preceding claims, wherein the controller (300) comprises two controller units, one for controlling the switchable film or foil and the other for controlling the projector (200).

12. The projection system (1000) of any of the preceding claims, wherein the controller (300) is able and designed to receive information on a vehicle (400,401) status and to determine related warning signs, warning messages and/or information based on the information on the vehicle status and to control the projector (200) to project these.

13. The projection system (1000) of any of the preceding claims, wherein the controller (300) is able and designed to control the degree of transparency based on the projected information.

14. A vehicle (400,401), especially a working vehicle (400,401), comprising a projection system (1000) of any of the preceding claims.

15. A method for projecting information of a window (410) of a vehicle (400,401), especially on a working vehicle (400,401), comprising the steps:
- adjusting a degree of transparency of a switchable foil or film (100) on or in at least parts of the window (410) of the vehicle (400,401), wherein of the switchable foil or film (100) is controllable by an applied voltage,
- displaying information on the switchable foil or film (100) using a projector (200).
